# EUROPEAN PATENT APPLICATION

(11) **EP 0 620 536 A1**
(43) Date of publication of application: **19.10.1994**
(21) Application number: 94201036.4
(22) Date of filing: 14.04.1994
(51) Int. Cl.: G06K 19/06, G08B 13/24

(54) **Magnetostrictively resonating label**

(30) Priority: 14.04.1993 NL 9300628
(71) Applicant: N.V. Nederlandsche Apparatenfabriek NEDAP, NL-7141 DE Groenlo (NL)
(72) Inventor: Hogen Esch, Johannes Harm Lukas, NL-7122 ZN Aalten (NL)
(74) Representative: Smulders, Theodorus A.H.J., Ir.

(57) **Abstract**

The invention relates to a magnetostrictively resonating label, intended for a detection or identification system. The label consists of a strip of amorphous magnetostrictive material (3) with a strip of hardmagnetic material opposite thereto (4,5). The hardmagnetic material (4,5) serves to ensure the presence of a bias magnetic field in the magnetostrictive material (3). The strip of hardmagnetic material is built up of two or more segments (4,5) of material of different coercivity, enabling polarization of one of these segments corresponding to the polarization direction of the applied magnetic field. Consequently, by means of a detection or identification system adapted for this purpose, depending on the polarization direction of the segments, the fundamental or dominant tone of the mechanically oscillating magnetostrictive strip can be detected.

## Description

The invention relates to a magnetostrictively resonating label for use in a detection or identification system, provided with at least one strip of a first type which comprises magnetostrictive material and responds to an electromagnetic field upon the generation of a bias magnetic field in the strip of the first type, and at least one strip of a second type which comprises hardmagnetic material and whereby a bias magnetic field can be generated in the strip of the first type upon magnetization of the strip of the second type.

Such a system is disclosed in, inter alia, European patent application 0352936. The label according to the European patent application comprises a separate strip, the strip of the first type being capable of being brought into an active or inactive mode through demagnetization or magnetization of this separate strip.

In electromagnetic detection systems based on labels consisting of amorphous magnetic material which either generate harmonics at the moment when magnetic saturation in the material arises, or are magnetostrictive and resonate mechanically at a resonance frequency, one of the problems is that these effects also occur in metal objects and articles other than the labels in question.

Efforts are directed to constructing these detection systems so as to be as selective as possible, in order to prevent "false alarm" as much as possible.

To achieve this, one of the possibilities is, for instance, to design a system wherein, instead of going from an active to an inactive mode, the labels, which should be activatable and deactivatable, go from one detectable mode to another detectable mode or from a mode having a combination of several detectable components to an inactive mode.

It is very unlikely that the same combination of detectable components occurs in other materials, objects or articles.

The necessity to use activatable and deactivatable labels is caused by the fact that these labels are used only once and are not removed after the sale of the article in question, but deactivated, so that no alarm is generated at the exit of a shop.

By providing several detectable components in the labels, it is also possible to design an identification system wherein the different labels in the system can be distinguished from each other. One of the conditions for such a system is that the label should be capable of being switched from one active mode to the other active or inactive mode in a very simple manner.

In an identification system, the different labels should be programmable in a very simple manner, without the mechanical tolerances being too critical or the movement of a magnetic read-write head being too precise.

The object of the present invention is to provide a solution to this and is characterized in that strip of the second type is built up of at least two segments of material having mutually different coercivity and capable of being polarized independently of each other, so that depending on the respective polarization directions of the segments, a fundamental tone or a dominant tone is generated by the strip of the first type upon being irradiated by the electromagnetic field.

The invention also relates to a system for detecting and/or identifying a label or group of labels, wherein the system comprises a transmitting unit for generating an electromagnetic interrogation field and a detection unit for detecting resonance effects caused by a label located within the interrogation field. In addition, the invention relates to a method for coding a label, wherein by means of a magnetic field of a first strength, segments of the label having a coercivity smaller than or equal to a first value are polarized in the same predetermined first direction. Subsequently, in accordance with a specific aspect of this method, by means of a magnetic field of a second strength that is smaller than the first strength, at least one segment polarized by means of the first magnetic field and having a coercivity smaller than the first value is polarized in a predetermined second direction.

According to another method for coding a label, by means of an alternating magnetic field of a first strength, all segments located within the alternating magnetic field having a coercivity smaller than a specific value are demagnetized, so that, depending on the segments that are still polarized, a strip of the first type belonging to said segments will resonate at different frequencies when it is brought into an electromagnetic interrogation field.

The invention will be explained with reference to the accompanying drawings and a number of other patent publications which indicate the prior art. In these drawings:
Fig. 1 is a diagram wherein the extension (delta sign) 1 of a strip of magnetostrictive material is plotted out as a function of the field strength H:
Fig. 2 is a schematic representation of a combination of a strip of the first type and a strip of the second type according to the invention;
Fig. 3 is a schematic representation of a possible embodiment of a label according to the invention; and
Fig. 4 is a schematic representation of a second possible embodiment of a label according to the invention.

A label according to the invention makes use of the magnetostrictive effect, i.e., a label is used that is built up of a strip or filament of amorphous magnetic material, here also referred to as a strip of the first type, having the characteristic that a deformation of the material occurs in a magnetic field.

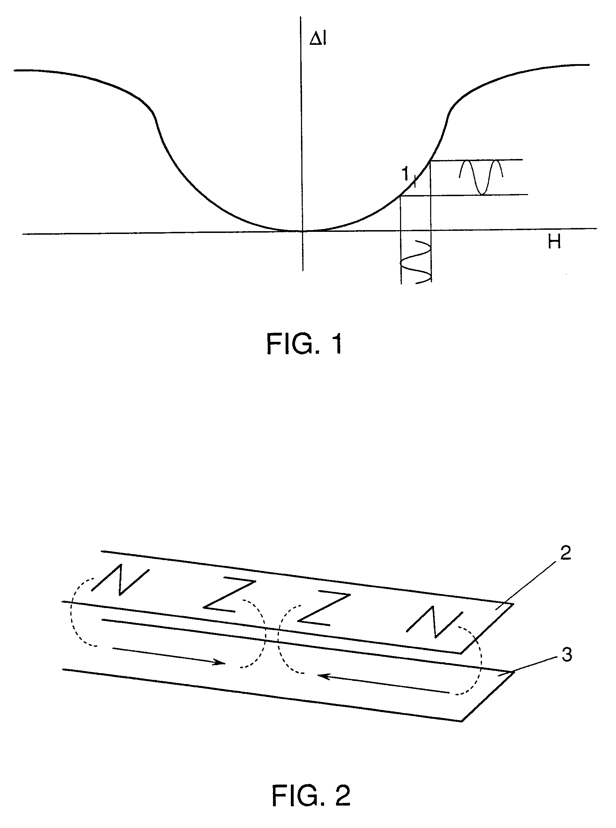

Fig. 1 shows a diagram wherein this extension l of a strip of magnetostrictive material having a length l is plotted out against the field strength H wherein this strip is located. This curve indicates that the extension of a stip of magnetostrictive material is limited independently of the increase of the field strength. It is also shown that an extension also occurs if the applied field becomes negative. In order to realize a maximum mechanical amplitude in an alternating magnetic field and also to limit the influence of the terrestial magnetic field, a so-called bias magnetic field is applied, which is a permanent magnetic field having a field strength such that without an externally applied alternating magnetic field, the point of rest shifts for instance to point (1) in Fig. 1. For applying this bias magnetic field, a strip or filament of hardmagnetic material is arranged directly opposite the strip of magnetostrictive material and this hardmagnetic strip is permanent magnetized such that the above-mentioned condition is satisfied.

If an alternating magnetic field is applied at such a strip, a mechanical oscillation occurs in the material having the same frequency as the applied alternating magnetic field.

Through the strip dimensions and the frequency selection it can be provided that these mechanical oscillations in the strip are resonant. Detection thereof is possible, as, for instance, upon interruption of the alternating magnetic field, the strip will continue to oscillate, which yields a detectable magnetic alternating field.

This situation is the known prior art as described in, for instance, U.S. Patent 4,727,360 to Lucian G. Ferguson (Securi Tag Systems Inc.), wherein the shape of the strip is such that subharmonics of the frequency of the received alternating magnetic field are sent back.

U.S. Patent 4,510,490 to Philip M. Anderson e.a. (Allied Corporation) and European Patent 0096182 to Philip M. Anderson e.a. (Identitech Corporation) describe a label consisting of several strips of amorphous magnetostrictive material, each having its own resonance frequency. Opposite each strip a permanent magnetic bias field is arranged in the form of a magnetized (polarized) hardmagnetic material so as to activate the relevant strip.

European patent 0295085 to Robert Martin Pettigrew (Scientific Generics) describes several possibilities for detecting different magnetic materials by means of, inter alia, a magnetostrictive strip of magnetic material.

If, in accordance with to the invention, a permanent bias magnetic field is arranged in the hardmagnetic strip (2) (strip of the second type), as indicated in Fig. 2, with the polarity of the magnetic field having changed direction within the bias field, under the influence of an alternating magnetic field extension takes place within the amorphous magnetostrictive strip (3) (strip of the first type) under one area, while at the same time shortening takes place under the other area, so that, in the case of two areas, a mechanical oscillation occurs which is the second dominant tone of the above-described fundamental oscillation.

PCT WO 92/12401 and PCT WO 92/12402 to Andrew Dames e.a. (Scientific Generics) describe a system wherein different magnetostrictive sections of material are used, moved under one hardmagnetic bias material, so that different resonance frequencies are formed enabling the different sections to be distinguished from each other. In this case, a hardmagnetic bias material is used, locally magnetic areas or patterns being present having different polarization directions, so that several dominant tones are formed and can be detected. A drawback of this method is that it is very hard to apply the varying magnetization of the bias field in the hardmagnetic material. This requires moving a magnetizing head directly above the relevant hardmagnetic material in order to apply the magnetization.

For applying the bias magnetic field in the label according to the present invention, a strip is used consisting of segments or portions of different materials having varying coercivity, because this offers the possibility of modifying or influencing the magnetization of the bias field locally even at a greater distance without requiring an accurate positioning of the magnetizing head.

European patent application publication 0353040 to Andrew Laurence Smith (Thorn EMI) and European patent application publication 0354759 by David Jones Sansom (Thorn EMI) describe a system wherein a similar technique is used as well. However, in this publication, the operation of the label is founded on a different principle and is based on electromagnetic harmonics formed in the case where a softmagnetic material is sent into magnetic saturation by an applied alternating electromagnetic field. This effect can be activated by applying bias magnetization in a layer consisting of alternatingly high and low coercive material, and deactivated by demagnetization of the low-coercive portions only. Hence, in the systems described in these two patent applications, no magnetostrictive mechanical resonance is used.

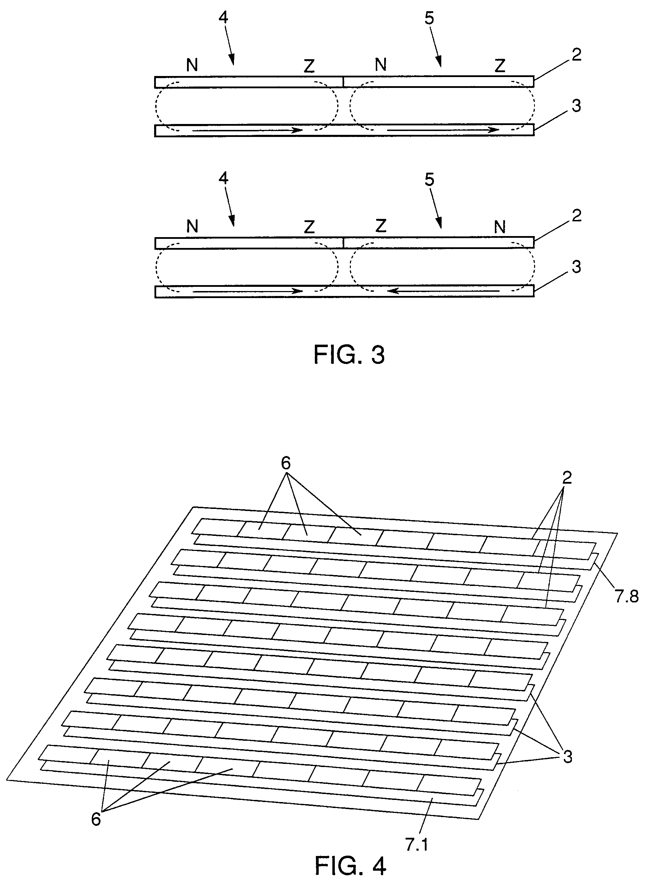

Fig. 3 schematically shows a label according to the invention, programmed in two states. Opposite a strip of amorphous magnetostrictive material (3), a second strip (2) is arranged, having for instance two portions or areas (segments) consisting of different materials of different coercivity (4) and (5). Portion (4) has for instance a relatively high coercivity and has been premagnetized by means of a strong magnet or an electromagnetic write head. Portion (5) has a lower coercivity. By placing the label in a permanent magnetic field or in an electromagnetic field, whose field strength is insufficient for influencing the polarity of the high-coercive material, the low-coercive material can, depending on the polarization direction, be polarized magnetically equal or opposite to the polarization direction of the high-coercive material. As a result, in an alternating electromagnetic field, the magnetostrictive strip (3) starts resonating at the mechanical fundamental frequency in the case of equal polarization and at the second dominant tone thereof in the case of opposite polarization. In this manner, two different oscillation modes can be programmed without displacing the label or the magnetic field, which modes can clearly be distinguished from each other in a detection or identification system.

In the eventual label, the strips (2) and (3) are mounted such that the magnetostrictive strip (3) can oscillate freely.

If several areas of hardmagnetic material of different coercivity are applied in the same manner, different oscillation modes (codes) of the amorphous magnetostrictive strip (3) can be programmed in a statically arranged electromagnetic field, starting with the material of the highest coercivity and ending with the material of the lowest coercivity. For instance, in a hardmagnetic strip (2) consisting of eight such areas, the fundamental frequency, the second, the fourth and the eighth dominant tone can be programmed.

The uneven dominant tones can be programmed as well, but these tones give a somewhat damped course of oscillation in the strip. Preferably, the polarization directions of the segments extend in the longitudinal direction of the segments. By applying an alternating magnetic field, a hardmagnetic area can be demagnetized, so that no change will occur in the opposite magnetostrictive material when used in the detection system. In this case, with the same strip, resonance occurs for different frequencies corresponding to either the fundamental tone or one of the dominant tones.

As is schematically shown in Fig. 4, a label according to the invention may also consist of a plurality of combinations, arranged side by side, of amorphous magnetostrictive strips (3) and hardmagnetic strips (2) built up of material segments (6) of different coercivity, while the different segments (6) of all strips of hardmagnetic material may have corresponding coercivity. Here too, the construction is such that these strips are located in cells within the label or card, so that they can oscillate freely.

In this embodiment, the fundamental frequencies of the different magnetostrictive strips (3) varies per strip by selecting a slightly different length for each strip. Now, a plurality of oscillation modes may be programmed per strip through the individual presentation, per hardmagnetic strip (2), of the magnetic field required for programming, by means of several electromagnets or by means of a moving electromagnet, the polarity of the different segments in each strip being determined by optionally reversing the direction of current in the electromagnet while the relevant segment is selected, through variation of the amplitude of the electromagnetic field.

In addition to the possibility of building up the hardmagnetic strip (2) from different materials of different coercivity, it is also possible to achieve this along the way of electrochemical deposition.

The identification systems according to the present invention can be used for identifying persons, animals or articles, for instance for controlling logistic processes during this identification or as a result thereof, or for establishing the presence of a label in a specific area, by means of an interrogation field.

Preferably, the segments are arranged relative to each other in the longitudinal direction of the strip of the second type (2), as shown in Fig. 4. In this Figure, a segment (6) extends in the longitudinal direction of the strip of the second type (2). In particular, a strip of the first type (3) is at least practically parallel to an associated strip of the second type (2). According to an advantageous embodiment, the label according to Fig. 4 comprises a plurality of strips of the first type (3) each having a different length so that resonance frequencies of these strips of the first type are also different from each other. Consequently, this involves that the resonance frequencies of the fundamental tones and the dominant tones of the last-mentioned strips are different from each other. In particular, the label comprises a plurality of combinations (7.1-7.8) of coacting strips of the first and second type. In this connection, a combination (7) may for instance consist of one strip of the first and one of the second type, as shown in Fig. 4.

According to the invention, the labels may be used in a detection system as well as in an identification system. Such a system may for instance be used for combatting shoplifting. However, it is also possible to use a label in a system for the identification of persons, for instance for permitting access to areas, buildings, vehicles or computer systems, for the identification of animals, for instance for the purpose of feeding, and for the identification of articles, for instance for the purpose of controlling logistic processes.

## Claims

1. A magnetostrictively resonating label for use in a detection or identification system, provided with at least one strip of a first type which comprises magnetostrictive material and responds to an electromagnetic field upon the generation of a bias-magnetic field in the strip of the first type, and at least one strip of a second type which comprises hardmagnetic material and whereby a bias magnetic field can be generated in the strip of the first type upon magnetization of the strip of the second type, characterized in that the strip of the second type is built up of at least two segments of material having mutually different coercivity and capable of being magnetized, independently of each other, in different directions, so that depending on the respective polarization directions of the segments, a fundamental tone or a dominant tone is generated by the strip of the first type upon being irradiated by the electromagnetic field.

2. A label according to claim 1, characterized in that one strip is provided with filamentary material.

3. A label according to any one of the preceding claims, characterized in that the segments are arranged relative to each other in the longitudinal direction of the strip of the second type.

4. A label according to any one of the preceding claims, characterized in that one segment extends in the longitudinal direction of the strip of the second type.

5. A label according to claim 4, characterized in that the polarization direction of one segment extends in the longitudinal direction of said segment.

6. A label according to any one of the preceding claims, characterized in that the strip of the first type is at least practically paralllel to the strip of the second type.

7. A label according to any one of the preceding claims, characterized in that the strip of the first type comprises amorphous magnetostrictive material.

8. A label according to any one of the preceding claims, characterized in that the label comprises a plurality of strips of the first type having mutually different lengths so that resonance frequencies of said strips of the first type are also different from each other.

9. A label according to claim 8, characterized in that the resonance frequencies of the fundamental tones and the dominant tones of the last-mentioned strips are different from each other.

10. A label according to claim 8 or 9, characterized in that the label comprises a plurality of combinations of strips of the first and the second type cooperating with each other.

11. A label according to claim 10, characterized in that one combination consists of one strip of the first and one of the second type.

12. A label according to any one of the preceding claims, characterized in that different segments of a strip of the second type respectively comprise different materials having a different coercivity.

13. A label according to any one of the preceding claims, characterized in that the segments of a strip of the second type are respectively formed through electrochemical deposition of different materials having different coercivity.

14. A system for detecting and/or identifying a label or group of labels according to any one of the preceding claims, wherein the system comprises a transmitting unit for generating an electromagnetic interrogation field and a detection unit for detecting resonance effects caused by a label located within the interrogation field.

15. A system according to claim 14, characterized in that the system identifies a label or a group of labels on the basis of the presence or absence of a fundamental tone, dominant tone or a combination of said tones transmitted by a label or group of labels.

16. A system according to claim 14 or 15, characterized in that the system is used for combatting shoplifting.

17. A system according to claim 14 or 15, characterized in that a label in the system is used for identifying persons, for instance for permitting access to areas, buildings, vehicles or computer systems.

18. A system according to claim 14 or 15, characterized in that a label in the system is used for identifying animals, for instance for the purpose of feeding.

19. A system according to claim 14 or 15, characterized in that a label in the system is used for identifying articles, for instance for the purpose of controlling logistic processes.

20. A method for coding a label according to any one of claims 1-13, characterized in that by means of a magnetic field of a first strength, segments of the label having a coercivity smaller than or equal to a first value are polarized in the same predetermined first direction.

21. A method according to claim 20, characterized in that subsequently, by means of a magnetic field of a second strength that is smaller than the first strength, at least one segment polarized by means of the first magnetic field and having a coercivity smaller than the first value is polarized in a predetermined second direction.

22. A method for coding a label according to any one of claims 1-13, characterized in that by means of an alternating magnetic field of a first strength, all segments located within the alternating magnetic field having a coercivity smaller than a specific value are demagnetized, so that, depending on the segments that are still polarized, a strip of the first type belonging to said segments will resonate at different frequencies when it is brought into an electromagnetic interrogation field.
